# EUROPEAN PATENT APPLICATION

(11) **EP 4 496 067 A1**
(43) Date of publication of application: **22.01.2025**
(21) Application number: 24188852.8
(22) Date of filing: 16.07.2024
(51) Int. Cl.: H01M 10/0587, H01M 50/533, H01M 50/538, H01M 10/052

(54) **ELECTRODE ASSEMBLY AND RECHARGEABLE BATTERY INCLUDING THE SAME**

(30) Priority: 18.07.2023 KR 20230093440
(71) Applicant: Samsung SDI Co., Ltd, Gyeonggi-do 17084 (KR)
(72) Inventor: Kim, Junghyun, Yongin-si, Gyeonggi-do 17084 (KR); Shin, Jooyoun, Yongin-si, Gyeonggi-do 17084 (KR); Park, Junghyun, Yongin-si, Gyeonggi-do 17084 (KR)
(74) Representative: Gulde & Partner

(57) **Abstract**

An electrode assembly includes: first and second electrodes, each comprising a conductive substrate and having an electrode active portion and a first electrode uncoated portion; and a separator. The first electrode, the separator, and the second electrode are stacked on each other and wound. At least one of the first electrode uncoated portion and the second electrode uncoated portion has a plurality of inclined cutout portions inclined with respect to a length direction of the electrode assembly, and an interval between adjacent ones of the inclined cutout portions at a frontal end of the electrode assembly and an interval between adjacent ones of the inclined cutout portions at a rear end of the electrode assembly are different.

## Description

### BACKGROUND

### 1. Field

Aspects of embodiments of the present disclosure relate to an electrode assembly and a rechargeable battery including the same.

### 2. Description of the Related Art

With technological development and demand for mobile devices, demand for rechargeable batteries as an energy source is increasing.

From among the kinds of rechargeable batteries, the cylindrical rechargeable battery includes an electrode assembly formed by arranging electrodes on both sides of a separator and winding them in the form of a jelly roll, a center pin disposed in a hollow portion at the center of the electrode assembly, a case accommodating the electrode assembly, and a cap assembly that seals an open side (or end) of the case.

The jelly roll-shaped electrode assembly is formed by winding strip-shaped electrodes, and electrode uncoated portions protrude in the height direction of the electrode assembly at opposite ends of the electrode assembly. Accordingly, to electrically connect the repeatedly wound electrode uncoated portion, the electrode uncoated portion is folded to overlap toward the center of the electrode assembly and then welded.

However, in the electrode assembly, it is not easy for the electrode uncoated portion, which is continuously wound into a cylindrical shape, to be folded toward the center of the electrode assembly. In addition, because the radius of curvature of the electrode uncoated portion adjacent to (or nearer to) the center of the electrode assembly and of the electrode uncoated portion located at an outer edge (or side) of the electrode assembly are different, it difficult to fold them equally toward the center.

### SUMMARY

The present invention is set out in the appended set of claims, wherein the drawings and respective description relate to advantageous embodiments thereof.

The present invention provides, a cylindrical electrode assembly and a rechargeable battery including the same capable of being fold toward an interior of the electrode assembly even when the repeatedly wound electrode uncoated portions have different radii of curvature.

By forming an inclined cutout portion in an electrode uncoated portion, the electrode uncoated portion be easily folded to overlap other portions of the electrode uncoated portion, thereby facilitating a compaction process.

According to the present invention, an electrode assembly includes: a first electrode including a conductive substrate and having a first electrode active portion including a first active material layer and a first electrode uncoated portion without the first active material layer; a separator; and a second electrode including a conductive substrate and having a second electrode active portion including a second active material layer and a second electrode uncoated portion without the second active material layer. The first electrode, the separator, and the second electrode are stacked on each other and wound. At least one of the first electrode uncoated portion and the second electrode uncoated portion has a plurality of inclined cutout portions inclined with respect to a length direction of the electrode assembly, and an interval between adjacent ones of the inclined cutout portions at a frontal end of the electrode assembly and an interval between adjacent ones of the inclined cutout portions at a rear end of the electrode assembly are different.

The intervals may gradually increase from a frontal end toward a rear end.

The intervals may be in a range between 1 mm to 4 mm.

An inclination angle of the inclined cutout portion at the frontal end and an inclination angle of the inclined cutout portion at the rear end may be different.

The inclination angles of the inclined cutout portions may be greater than or equal to 45 and smaller than 90 degrees.

The inclination angles of the inclined cutout portions may gradually increase from the frontal end toward the rear end.

The inclined cutout portions may have a depth in a range of 40% to 80% of a height of the corresponding first electrode uncoated portion or second electrode uncoated portion.

Each of the first electrode uncoated portion and the second electrode uncoated portion may have a first region having a plurality of small portions of different widths and a second region having a plurality of small portions having the same width, and the first region may be at the frontal end of the electrode assembly.

A width of the small portion of the first region may gradually increase away from the frontal end.

At least one of the first electrode uncoated portion or the second electrode uncoated portion includes a frontal end uncoated region, and the frontal end uncoated region may have a height that increases in multi-stages away from the frontal end of the electrode assembly.

A width of each stage of the frontal end uncoated region may be in a range of 45 mm to 55 mm.

Th frontal end uncoated region may have three stages to six stages.

Each stage of the frontal end uncoated region may be wound to overlap each other, and an upper stage from among the stages of the frontal end uncoated region may entirely overlap a lower stage from among the stages of the frontal end uncoated region.

A width of the frontal end uncoated region may have a length in a range of 10% to 20% of an entire length of an active material layer of the corresponding first electrode or second electrode.

A frontmost end uncoated region may be connected to the frontal end uncoated region to be closer to a center than the frontal end uncoated region, and a height of the frontmost end uncoated region may be 1 mm or less.

A width of the frontal end uncoated region and a width of the frontmost end uncoated region may be in a range of 20% to 30% of the entire length of the active material layer of the corresponding first electrode or the second electrode.

A greatest height of the frontal end uncoated region may be lower than a height of the corresponding first electrode uncoated portion or the second electrode uncoated portion.

A frontmost end uncoated region may be connected to at least one of the first electrode uncoated portion or the second electrode uncoated portion and is connected to be closer to a center than the first electrode uncoated portion or the second electrode uncoated portion, and a height of the frontmost end uncoated region may be 1 mm or less.

A width of the frontmost end uncoated region may have a length in a range of 10% to 20% of an entire length of an active material layer of the corresponding first electrode or the second electrode.

The second aspect of the present invention is a rechargeable battery includes: the electrode assembly as described above; a cylindrical case accommodating the electrode assembly; a center pin at a center of the electrode assembly; and a cap assembly covering and sealing the cylindrical case.

### BRIEF DESCRIPTION OF THE DRAWINGS

FIG. 1 is a longitudinal cross-sectional view of a rechargeable battery according to an embodiment.
FIG. 2 is a schematic illustration of an electrode assembly according to an embodiment.
FIG. 3 is an unfolded view of a portion of an electrode assembly according to an embodiment.
FIG. 4 is an unfolded view of a portion of an electrode assembly according to another embodiment.
FIG. 5 and FIG. 6 are unfolded views of a portion of an electrode assembly to according to other embodiments.
FIG. 7 is a cross-sectional view of a portion of an electrode assembly including the electrode uncoated portion shown in FIG. 5.
FIG. 8 is a longitudinal cross-sectional view of a rechargeable battery according to another embodiment.

### DETAILED DESCRIPTION

The present description will be described more fully hereinafter with reference to the accompanying drawings, in which embodiments of the present description are shown.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

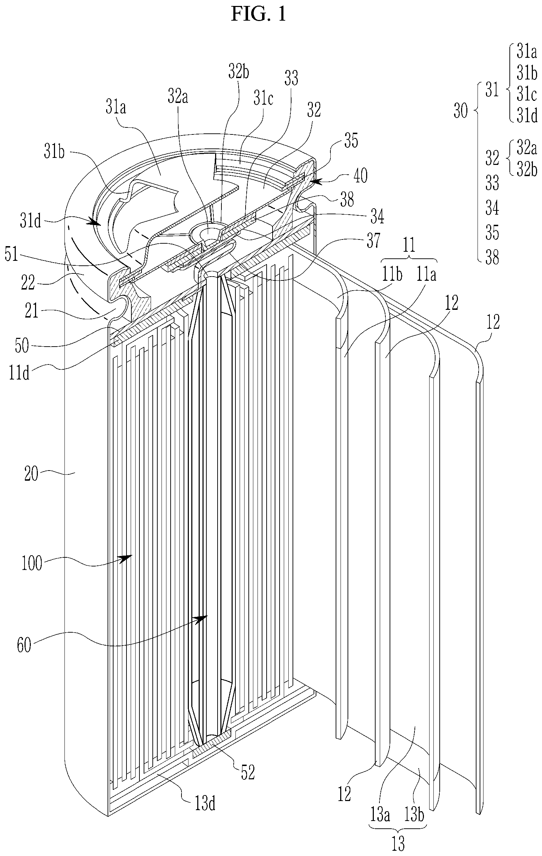

FIG. 1 is a longitudinal cross-sectional view of a rechargeable battery according to an embodiment.

As shown in FIG. 1, a rechargeable battery, according to an embodiment, may include an electrode assembly 100, a case 20 accommodating the electrode assembly 100, a cap assembly 30 coupled to an opening in the case 20 with a gasket interposed therebetween and electrically connected to the electrode assembly 100, an insulation plate 50 between the cap assembly 30 and the electrode assembly 100, and a center pin 60 disposed at a center of the electrode assembly 100.

The electrode assembly 100 includes a first electrode 11, a separator 12, and a second electrode 13 that are sequentially stacked. The electrode assembly 100 may be a cylindrical jelly roll formed by stacking the first electrode 11, the separator 12 and the second electrode 13 and then winding them around the center pin 60.

The first electrode 11 includes a conductive substrate (or current collector) formed as a thin metal plate having a first electrode active portion 11a at where an active material layer (e.g., a transition metal oxide, such as LiCoO₂, LiNiO₂, LiMn₂O₄, or the like) is formed on both surfaces of the substrate and a first electrode uncoated portion 11b formed on an edge of the substrate along (or adjacent to) the electrode active portion 11a and exposing the substrate by not forming the active material layer. An end portion of the active material layer may be covered by an insulation layer or the like, and the first electrode uncoated portion 11b may be an area at where the substrate is present along with, in some embodiments, other layers, such as the insulation layer, but where the active material layer is not formed.

The second electrode 13 includes a substrate formed as a thin metal plate having a second electrode active portion 13a at where an active material layer (e.g., graphite, carbon, or the like) is formed on both surfaces of the substrate and a second electrode uncoated portion 13b formed on an edge along (or adjacent to) the electrode active portion 13a and exposing the substrate by not forming an active material layer. The end portion of the active material layer may be covered by an insulation layer or the like, and a second electrode uncoated portion 13b may be an area at where the substrate is present along with, in some embodiments, other layers, such as the insulation layer, but where the active material layer is not formed.

In the illustrated embodiment, the first electrode 11 may be a positive electrode, and the second electrode 13 may be a negative electrode. In other embodiments, however, this may be reversed.

Therefore, in the illustrated embodiment, the substrate of the first electrode 11 may be aluminum (Al), and substrate of the second electrode 13 may be nickel (Ni), copper (Cu), or an alloy of nickel and copper.

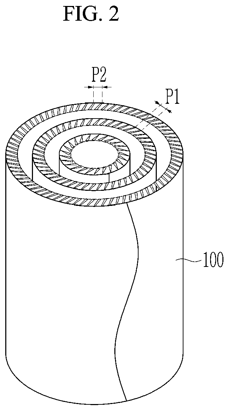

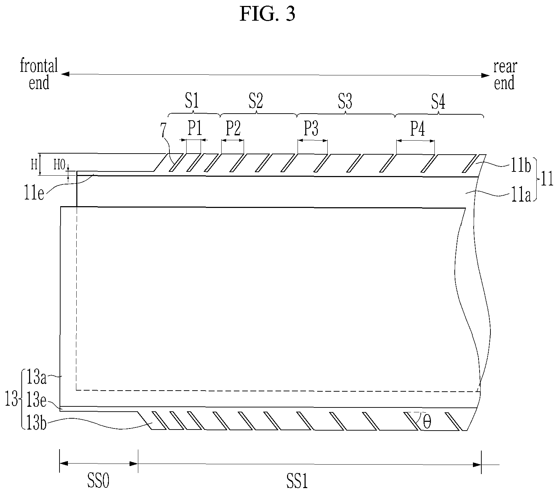

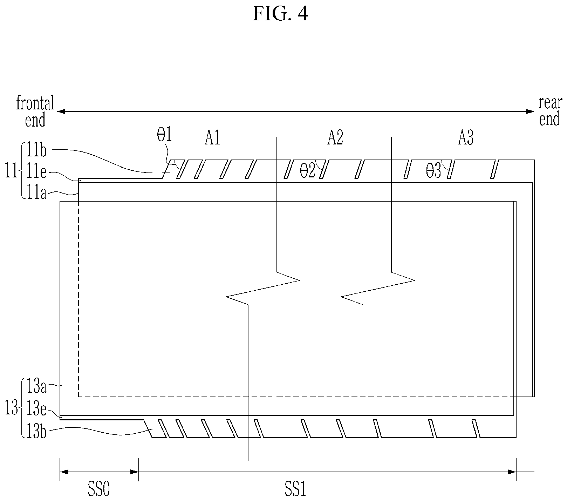

FIG. 2 is a drawing schematically showing an electrode assembly to describe an electrode uncoated portion according to an embodiment. FIG. 3 is an unfolded view of a portion of an electrode assembly to describe an electrode uncoated portion according to an embodiment. FIG. 4 shows a portion of an electrode assembly in an unfolded state to describe an electrode uncoated portion according to another embodiment.

Referring to FIG. 2 and FIG. 3, a plurality of inclined cutout portions (e.g., inclined cut portions) 7 are formed in each of the first electrode uncoated portion 11b and the second electrode uncoated portion 13b. The inclined cutout portion 7 may be inclined with respect to a length direction of the first electrode uncoated portion 11b and the second electrode uncoated portion 13b, that is, inclined with respect to a winding direction. The inclined cutout portion 7 may be formed by using laser.

The first electrode uncoated portion 11b and the second electrode uncoated portion 13b may be formed to be symmetrical with respect to an imaginary horizontal center line that bisects the first electrode or the second electrode in a width direction.

The inclined cutout portions 7 in the first electrode uncoated portion 11b and the second electrode uncoated portion 13b may be inclined at an angle greater than or equal to 45° and smaller than 90°, preferably in a range of 45° to 90°, and in the inclined cutout portion 7, an angle (θ) with respect to one side of the electrode active portions 11a and 13a in the length direction may increase from frontal ends toward rear ends of the first electrode uncoated portion 11b and the second electrode uncoated portion 13b located at the center of the electrode assembly.

In addition, intervals P1, P2, P3, P4, ... between adjacent ones of the inclined cutout portions 7 may increase from the frontal end toward the rear end. In the illustrated embodiment, the intervals P1, P2, P3, P4, ... between the inclined cutout portions 7 may sequentially increase from 1 mm at the frontal end to 4 mm at the rear end. Thus, a width of a small portion of the first region may gradually increase away from the frontal end.

Accordingly, as the curvature radius increases away from (or farther from) center of the electrode assembly, not only do the intervals P1, P2, P3, P4, ... between the inclined cutout portions 7 increase but also an inclination angle θ of the inclined cutout portion 7 increases, such that the first electrode uncoated portion 11b and the second electrode uncoated portion 13b may be easily folded toward the center.

When the electrode uncoated portion separated by a number (e.g., a preset or predetermined number) of inclined cutout portions 7 is referred to as one small group S1, S2, S3, and S4, intervals P1, P2, P3, and P4 of the inclined cutout portions 7 formed within each small group may be the same.

In addition, as shown in FIG. 4, an inclination angle of the inclined cutout portion located at the frontal end and an inclination angle of the inclined cutout portion located at the rear end may be different from each other. In the illustrated embodiment, the inclination angle may gradually increase from the frontal end to the rear end. Thus, the inclination angles of the inclined cutout portions 7 may gradually increase from the frontal end toward the rear end.

For example, when a length of the entire active material layer is divided into three portions A1, A2, and A3, in the first electrode uncoated portion 11b and the second electrode uncoated portion 13b, a first angle θ1 of inclined cutout portions in the first portion A1 adjacent to the frontal end may be greater than or equal to 60° and smaller than 70°, preferably in a range of 60° to 70°, a second angle θ2 of inclined cutout portion in the second portion A2 may be greater than or equal to 70° and smaller than80°, preferably in a range of 70° to 80°, and a third angle θ3 of inclined cutout portion in the third portion A3 may be greater than or equal to 80° and smaller than 90°, preferably in a range of 80° to 90°,.

The inclination angle may vary whenever the inclined cutout portion is formed, but is not limited thereto, and as shown in FIG. 4, may have the same inclination angle in each of the same small group.

Referring back to FIG. 3, the inclined cutout portion 7 may be formed up to (e.g., may extend into) 40% to 80%, preferably 60% to 80%, of the height H of the electrode uncoated portions 11b and 13b, and the inclined cutout portion 7 may be formed at a depth in a range of 3 mm to 6 mm. Therefore, neighboring electrode uncoated portions in a cut state are integrally connected without being separated and may be formed elongated along the length direction of the active material layer. Therefore, a distance (or height) from the active material layer, that is, 60% to 20%, preferably 60% to 40%, of the height H of the electrode uncoated portion, may be connected without forming the inclined cutout portion.

In an embodiment, to prevent a short circuit at the frontal end that is further forward than the electrode uncoated portion in which the inclined cutout portion 7 is formed, frontmost end uncoated regions 11e and 13e located in a region SS0 at where the electrode uncoated portion is removed or substantially removed may be formed. The frontmost end uncoated regions 11e and 13e are mostly removed in the direction of height H of the electrode uncoated portion, and a height H0 of the frontmost end uncoated region may remain by 1 mm. A width (e.g., the length direction of the active material layer) of the frontmost end uncoated regions 11e and 13e may be 10% to 20% of the entire length of the first electrode or the second electrode active material layer.

By forming the inclined cutout portion, after winding, the electrode uncoated portion may be easily folded in a central direction to overlap, and the compaction process and welding process may be facilitated.

Referring back to FIG. 1, the separator 12 may be disposed between the first electrode 11 and the second electrode 13 to insulate them. The separator 12 may be formed of polyethylene, polypropylene, polyvinylidene fluoride, or may be a multilayer including two or more layers thereof, or may be formed of a mixed multilayer, such as polyethylene/polypropylene 2-layer separator, polyethylene/polypropylene/polyethylene 3-layer separator, polypropylene/polyethylene/polypropylene 3-layer separator, or the like.

In the jelly roll state, a first electrode current collector 11d may be connected to the first electrode uncoated portion 11b of the electrode assembly 100, and a second electrode current collector 13d may be connected to the second electrode uncoated portion 13b of the electrode assembly 100.

The second electrode current collector 13d may contact the case 20. The first electrode current collector 11d may be formed to have a narrower width than the second electrode current collector 13d such that the first electrode current collector 11d does not to contact the case 20.

The first electrode uncoated portion 11b of the first electrode 11 may be bent toward the center pin 60, which is a center of the electrode assembly 100, and the neighboring first electrode uncoated portions 11b may be stacked (e.g., stacked on each other) to overlap and to be electrically connected to each other. In an embodiment, the first electrode uncoated portion 11b may be easy folded by forming the inclined cutout portions 7.

The first electrode uncoated portion 11b may be electrically connected to the first electrode current collector 11d in an overlapped state.

The first electrode uncoated portion 11b has a first surface in contact with and electrically connected to the first electrode current collector 11d and a second surface facing an end portion of the second electrode 13, and the second surface is spaced apart from the end portion of the second electrode 13.

An insulation layer may be formed on the first surface and the second surface of the first electrode uncoated portion 11b.

A lead tab 37 may be electrically connected to the first electrode current collector 11d.

A first end of the lead tab 37 may be connected to the first electrode current collector 11d by welding, and a second end thereof may be electrically connected to the cap assembly 30. The lead tab 37 may be bent so that one surface thereof faces the electrode assembly 100 to increase contact area between it and the cap assembly 30.

The insulation plate 50 has an opening exposing the center pin 60 and may be located above the first electrode current collector 11d.

The insulation plate 50 may be formed to be larger (e.g., wider) than the first electrode current collector 11d such that the insulation plate 50 may be in contact with an interior surface of the case 20. By forming the insulation plate 50 to be larger than the first electrode current collector 11d, a uniform gap may be formed between the first electrode current collector 11d and the case 20 by the width by which the insulation plate 50 protrudes outwardly from (e.g., protrudes beyond) the first electrode current collector 11d. The gap between the first electrode current collector 11d and the case 20 may prevent a short circuit due to contact between the first electrode current collector 11d and the case 20.

The lead tab 37 may contact and may be connected to a first auxiliary plate 34 of the cap assembly 30, which will be described in more detail later, through an opening 51 in the insulation plate 50.

Because the electrode assembly 100 is wound around the center pin 60, the center pin 60 may be located at the center of the electrode assembly 100 and may be aligned in the direction in which the electrode assembly 100 is inserted into the case 20.

The center pin 60 is designed to reduce or minimize deformation or maintain a shape close to its original shape (e.g., its shape before the deformation) when receiving an entire compressive load or local impact load acting from the outside of the rechargeable battery and may be in the form of a hollow circular pipe. Additionally, the center pin 60 may act as a passage for gas generated internally. In some embodiments, the center pin 60 may be omitted.

The center pin 60 may be formed of a rigid material, for example, a conductive metal, such as steel, steel alloy, aluminum, aluminum alloy, etc., to be minimally deformed against external impact. As such, because the center pin 60 is conductive, both ends of the center pin 60 are installed to maintain an electrically insulated state with respect to the first electrode current collector 11d and the second electrode current collector 13d.

In some embodiments, an insulating pad 52 is disposed between a lower end of the center pin 60 and the second electrode current collector 13d corresponding thereto. An upper end of the center pin 60 penetrates (e.g., extends through) the through hole (e.g., opening) formed in the center of the first electrode current collector 11d in an insulated state and is supported on the insulation plate 50. In the illustrated embodiment, the upper end of the center pin 60 may be spaced apart from the through hole in the first electrode current collector 11d, and an insulation member may be interposed between them. Accordingly, movement of the center pin 60 in the length direction is restricted, and the center pin 60 may be maintained in a stable state at the center of the electrode assembly 100.

The case 20 is open on one side so that the electrode assembly 100 can be inserted therein together with the electrolyte and may be formed to have approximately the same shape as the jelly roll-shaped electrode assembly 100.

For example, the case 20 may have a circular bottom portion and a cylindrical side portion extending a certain length from the bottom portion. During the assembly process of the rechargeable battery, an upper part of the cylindrical case may be open. Therefore, during the assembly process of the rechargeable battery, the electrode assembly can be inserted into the cylindrical case, and then, the electrolyte solution can be injected into the cylindrical case.

The electrolyte solution allows lithium ions generated by electrochemical reactions to move between the first and second electrodes inside the battery. The electrolyte solution may include (or may be composed of) lithium salts, such as LiPF₆ or LiBF₄, in organic solvents, such as EC, PC, DEC, EMC, and EMC. The electrolyte solution may be in a liquid, solid, or gel-state.

The case 20 may be connected to the second electrode current collector 13d of the electrode assembly 100 and may act as a second electrode terminal of the rechargeable battery. Accordingly, the case 20 may be formed of a conductive metal, such as aluminum, aluminum alloy, or nickel-plated steel.

The cap assembly 30 may be located in the opening in the case 20 and may be coupled to the case 20 with a gasket 40 interposed therebetween. The gasket 40 may insulate the case 20 and the cap assembly 30 from each other and may close and seal the interior of the case 20 where the electrode assembly 100 and electrolyte solution are accommodated.

The cap assembly 30 may include a cap plate 31, a positive temperature coefficient element 35, a vent plate 32, an insulation member 33, the first auxiliary plate 34, and a second auxiliary plate 38.

The first auxiliary plate 34 may be electrically connected to the lead tab 37 of the electrode assembly 100 and may be coupled to the lead tab 37 by welding.

The second auxiliary plate 38 may be stacked on the first auxiliary plate 34 to be electrically connected to the first auxiliary plate 34 and may be coupled to the first auxiliary plate 34 by welding. The second auxiliary plate 38 may be located at a center of the electrode assembly 100 corresponding to (e.g., aligned with) the center pin 60 and may have a through hole exposing the first auxiliary plate 34.

The vent plate 32 may be located above the second auxiliary plate 38 with the insulation member 33 interposed therebetween. An edge of the vent plate 32 may be inserted into the gasket 40 and may be coupled to the case 20.

The vent plate 32 may include a vent 32a located in a portion corresponding to the center pin 60. The vent 32a may be formed to protrude from the vent plate 32 toward the electrode assembly 100 and may be in contact with and electrically connected to the first auxiliary plate 34 through the through hole in the second auxiliary plate 38. The vent plate 32 may have, around the vent 32a, a notch 32b that guides breakage of the vent 32a in the event of an overpressure in the case 20.

The vent 32a may be broken under a reference (or preset) pressure condition, releasing the internal gas to the outside and blocking the electrical connection to the first auxiliary plate 34. For example, when the internal pressure of the case 20 increases due to the generation of gas, the notch 32b may be damaged (e.g., may burst) and the gas may be discharged to the outside through the discharge hole 31d, which will be described in more detail later, thereby preventing explosion of the rechargeable battery.

Additionally, if the abnormal reaction continues and the vent 32a is broken, the electrical connection between the vent plate 32 and the first auxiliary plate 34 is broken. Accordingly, the electrical connection between the first auxiliary plate 34 and the cap plate 31 electrically connected to the vent plate 32 is broken, and the current is cut off.

The cap plate 31 may include a central plate 31a corresponding to the center pin 60 that is at the center of the electrode assembly 100, a plurality of branch portions 31b extending from the central plate 31a toward the gasket 40, and a coupling plate 31c connecting a first end of the branch portions 31b and inserted into and coupled to the gasket 40. A discharge hole 31d that is open to the outside and is for discharging internal gas is formed between adjacent branches 31b.

The branch portion 31b is bent from the coupling plate 31c and connected to the center plate 31a so that the center of the cap plate 31 protrudes away from the case 20. The cap plate 30 may be electrically connected to the first electrode current collector 11d through the vent plate 32, the second auxiliary plate 38, the first auxiliary plate 34, and the lead tab 37 and may act as the first electrode terminal of the rechargeable battery. Therefore, when the center of the cap plate 31 is formed to protrude outside the case 20, terminal connection to external devices can be facilitated.

The positive temperature coefficient element 35 may be formed along a second plate of the cap plate 31 and may be inserted into the gasket 40 and coupled to it in a stacked state between the second plate of the cap plate 31 and the edge of the vent plate 32.

The positive temperature coefficient element 35 may be installed between the cap plate 31 and the vent plate 32 and may control the current flow between the cap plate 31 and the vent plate 32 according to the internal temperature of the rechargeable battery.

When the internal temperature is within a reference (or preset) range, the positive temperature coefficient element 35 acts as a conductor to electrically connect the cap plate 31 and the vent plate 32. However, when the internal temperature exceeds the reference temperature, the positive temperature coefficient element 35 has an electrical resistance that increases to infinity. Therefore, the positive temperature coefficient element 35 may, under some circumstances, block the flow of charge or discharge current between the cap plate 31 and the vent plate 32.

After the electrode assembly 100 is inserted into the case 20, the cap assembly 30 is inserted into the gasket 40 while the vent plate 32, the positive temperature coefficient element 35, the cap plate 31 are stacked on an edge of the cap assembly 30 and is then fitted into the opening in the case 20.

Then, the cap assembly 30 is fixed to the opening in the case 20 through a crimping process. In the illustrated embodiment, a beading portion 21 and a crimping portion 22 may be formed on a side adjacent to the opening in the case 20. The beading portion 21 may be formed through a beading process. The beading portion 21 is a structure or configuration characterized by a depression (or recess) from an upper side of the case 20 toward a center of the case 20 in a diameter direction while the electrode assembly 100 is accommodated in the case 20 and prevents vertical movement of the electrode assembly 100.

The crimping portion 22 protrudes relatively more than the beading portion 21 in the diameter direction, is connected to the beading portion 21, and forms upper and lower surfaces connected to an exterior circumference of the cap assembly 30 and this exterior circumference interposing the gasket 40.

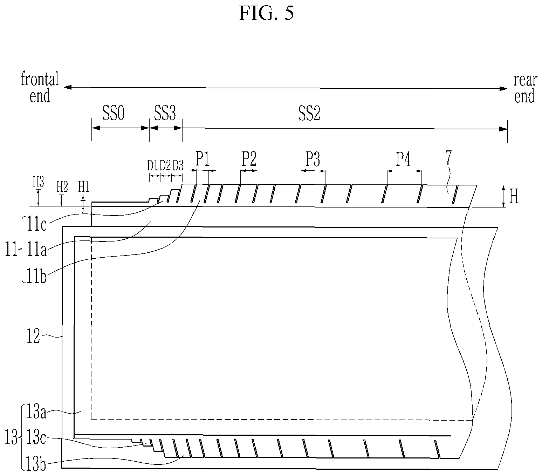

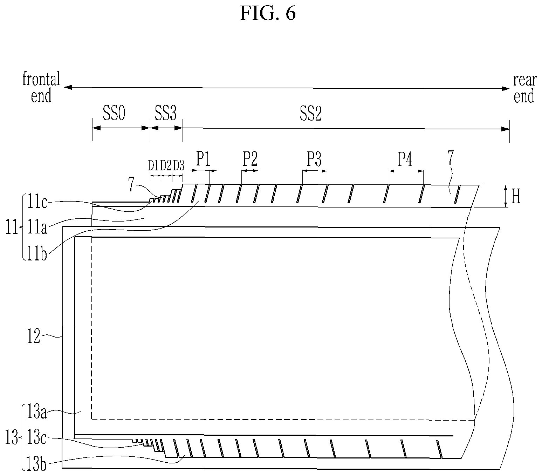

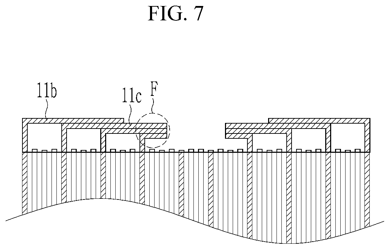

FIG. 5 and FIG. 6 show a portion of an electrode assembly in an unfolded state to describe the electrode uncoated portion according to other embodiments. FIG. 7 is a cross-sectional view of a portion of an electrode assembly including the electrode uncoated portion shown in FIG. 5.

The first electrode 11 and the second electrode 13 shown in FIG. 5 are substantially the same as the first electrode 11 and the second electrode 13 shown in FIG. 3, and differences therebetween will be primarily described in the following description.

As shown in FIG. 5, the first electrode uncoated portion 11a of the first electrode 11 and/or the second electrode uncoated portion 13b of the second electrode 13, according to another embodiment, includes a second region SS3 having different heights H1, H2, and H3 from a first region SS2 having a uniform height.

Hereinafter, for better understanding and ease of description, the electrode uncoated portion located in the second region SS3 is referred to as the frontal end uncoated regions 11c and 13c.

The frontal end uncoated regions 11c and 13c may be located at the frontal end of the substrate that starts winding, and its height may increase away from the frontal end. Thus, a greatest height of the frontal end uncoated region 11c and 13c is may be lower than a height of the corresponding first electrode uncoated portion 11b or the second electrode uncoated portion 12b and 13b. For example, a first height H1, a second height H2, a third height H3 are referred to in a sequence away from the frontal end, and the height may increase from the first height H1 to the third height H3. The electrode uncoated portions of a second region SS1 may have different heights as the first height H1 to the third height H3, and each portion may be separated by an inclined cutout portion 7.

In the illustrated embodiment, widths D1, D2, and D3 of portions forming the first height H1, the second height H2, the third height H3 may be the same, but the present disclosure is not limited thereto. For example, the widths D1, D2, and D3 of the respective portions may be in a range of 45 mm to 55 mm and may sequentially increase.

The above embodiment has been described with an example in which the frontal end uncoated region has three different heights, but it is not limited thereto. Depending on the height of the electrode uncoated portion, it may be formed in three stages to six stages and may have widths in a range of 135 mm to 330 mm, preferably 150 mm to 250 mm. Thus, the frontal end uncoated region 11c and 13c may have three stages to six stages.

The widths D1, D2, and D3 of the frontal end uncoated regions 11c and 13c may be formed in a range of 10% to 20% of the entire length of the active material layer of the first electrode or the second electrode.

When the frontal end uncoated regions 11c and 13c are formed together with the frontmost end uncoated regions 11e and 13e, a sum of a width of the frontmost end uncoated regions 11e and 13e and a width of the frontal end uncoated regions 11c and 13c may be 20% to 30% of the entire length of the active material layer of the first electrode or the second electrode.

In an embodiment, each stage of the frontal end uncoated region 11c and 13c may be wound to overlap each other, and an upper stage from among the stages of the frontal end uncoated region 11c and 13c may entirely overlap a lower stage from among the stages of the frontal end uncoated region 11c and 13c.

In addition, as shown in FIG. 6, the inclined cutout portion may be formed in each portion of the frontal end uncoated region such that it may be more easily folded during the compaction process of the electrode uncoated portion.

The frontal end uncoated regions 11c and 13c may a region on which welding is performed after winding. At this time, the first region SS1 adjacent to the second region SS2 may also be partially welded.

Referring to FIG. 7, because multi-stage is formed by forming the different heights H1, H2, and H3, each portion overlaps when folded toward the center of the electrode assembly, and the electrode uncoated portion forms a structure F overlapping in a plurality of layers.

As such, when the overlapped structure F is formed, the heat generated at welding may be reduced from being transferred to the interior of the electrode assembly due to thick thickness; thereby, welding strength may be secured thereby increasing stability.

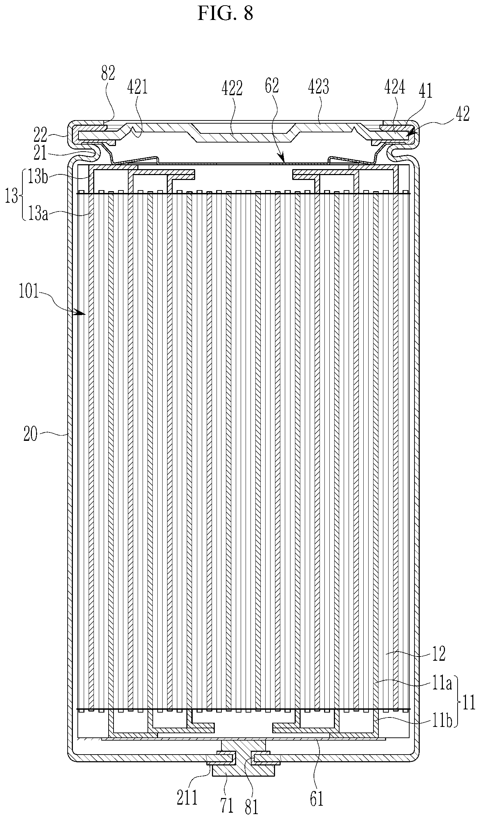

FIG. 8 is a longitudinal cross-sectional view of a rechargeable battery according to another embodiment.

Referring to FIG. 8, a rechargeable battery, according to an embodiment, includes an electrode assembly 101, the case 20 configured to accommodate the electrode assembly 101, a second current collector 61 connected to the electrode assembly 101, a second current collector 62, an electrode terminal 71, a vent plate 42, and a gasket 41.

In the electrode assembly 101, the first electrode 11, the separator 12 and the second electrode 13 overlap, and similar to the embodiment shown in FIG. 1, may be in a jelly roll state. The first electrode 11 may have the first electrode active portion 11a at where the active material layer is formed on the substrate and the first electrode uncoated portion 11b exposing the substrate by not forming the active material layer thereon. The second electrode 13 may have the second electrode active portion 13a at where the active material layer is formed on both surfaces of the substrate and the second electrode uncoated portion 13b exposing the substrate by not forming the active material layer thereon.

The first electrode 11 and the second electrode 13 may be an electrode according to an embodiment shown in, for example, FIG. 2 to FIG. 6, and may include an inclined line unfolding portion or the frontal end formed in multi-stages.

The first electrode uncoated portion 11b and the second electrode uncoated portion 13b are provided at both ends of the electrode assembly 101 in a winding axis direction (e.g., both ends in the vertical direction in FIG. 8), respectively, and in the same direction, the electrode terminal 71 and the case 20 having different polarities may be provided together.

The vent plate 42 may be located on an opposite side of the electrode terminal 71.

The case 20 is formed as a cylinder to accommodate the electrode assembly 101, and the electrode terminal 71 and the vent plate 42 are respectively disposed at both axial ends of the case 20 by the electrode uncoated portions 11b and 13b. The electrode terminal 72 is connected to the first electrode 11 through the first current collector 61, and the case 20 is connected to the second electrode 13 through the second current collector 62. In the illustrated embodiment, the vent plate 42 is electrically separated (or isolated) from the second current collector 62 and the case 20 and does not have polarity (e.g., is electrically floating).

A notch 421 is formed on the interior surface of the vent plate 42, and the notch 421 is damaged (e.g., bursts) when the rechargeable battery event occurs, thereby reducing internal pressure and preventing explosion of the rechargeable battery. The bent plate 42 is formed as a circular plate and includes a central portion 422, a convex portion 423, and an outer portion 424.

The central portion 422 is concavely formed toward the electrode assembly 101, the convex portion 423 is formed on an outer side of the central portion 422 in the diameter direction convexly to face away from the electrode assembly 101, and the outer portion 424 is on the same plane as the central portion 422 at an outer side of the convex portion 423 in the diameter direction.

The electrode terminal 71 connected to the first electrode 11 of the electrode assembly 101 and inserted into the case 20 from the outside is installed on one side of the case 20. For this purpose, the case 20 has a first opening 81 on one side (e.g., on one end). A sealing member 211 is provided in the first opening 81 to form an air-tight structure with respect to the electrolyte solution by interposing between the first opening 81 and the electrode terminal 71 and to electrically insulate the electrode terminal 71 from the case 20.

In the illustrated embodiment, the second current collector 61 may be electrically connected to the first electrode uncoated portion 11b and electrically and mechanically connected to the electrode terminal 71. The second current collector 61 is in contact with most of the first electrode uncoated portion 11b to reduce resistance and is electrically connected to the electrode terminal 71.

The electrode terminal 71 may be connected to a first end of the second current collector 61 by welding and may be installed in the first opening 81 in the case 20 in a rivet structure. The electrode terminal 71 may be formed to protrude more than (e.g., to protrude beyond) an outer surface of the case 20 around the first opening 81 and may act as a positive electrode terminal. In this embodiment, the second current collector 61 is a positive electrode current collector.

In addition, the case 20 has a second opening 82 such that a second side of the case 20 is completely open such that the electrode assembly 101 may be inserted into the case 20. The vent plate 42 may be electrically separated from the case 20 by inserting the electrode assembly 101 into the case 20 and then sealing the second opening 82 with the gasket 41 around the vent plate 42.

In the illustrated embodiment, the second current collector 62 may be electrically connected to the second electrode uncoated portion 13b and electrically connected to the case 20. The second current collector 62 is in contact with most of the second electrode uncoated portion 13b to reduce resistance and is connected to the case 20.

The vent plate 42 may be electrically separated from the second current collector 62 and installed in the second opening 82 in the case 20 by a crimping process with the gasket 41 interposed therebetween. In the illustrated embodiment, the beading portion 21 and the crimping portion 22 may be formed on a side adjacent to the second opening 82 in the case 20. The beading portion 21 may be formed through a beading process. The beading portion 21 is depressed (or recessed) from the upper side of the case 20 toward the center of the case 20 in the diameter direction while accommodate the electrode assembly 101 in the case 20 and may prevent vertical movement of the electrode assembly 101. The crimping portion 22 protrudes relatively more than the beading portion 21 in the diameter direction, is connected to the beading portion 21, and has upper and lower surfaces connected to an exterior circumference of the vent plate 42 with the gasket 40 interposed.

### <Description of Some Reference Symbols>

- 7: Inclined cutout portion
- 11: First electrode
- 11a: Portion
- 11b: First electrode uncoated portion
- 11d: First electrode current collector
- 12: Separator
- 12b: Second electrode uncoated portion
- 13: Second electrode
- 13a: Second electrode active portion
- 13b: Second electrode uncoated portion
- 13d: Second electrode current collector
- 20: Case
- 21: Beading portion
- 22: Crimping portion
- 30: Cap assembly
- 31: Cap plate
- 31a: Plate
- 31b: Branch portion
- 31c: Coupling plate
- 31d: Discharge hole
- 32, 42: Vent plate
- 32a: Vent
- 32b, 421: Notch
- 33: Insulation member
- 34: First auxiliary plate
- 35: Positive temperature coefficient element
- 37: Lead tab
- 38: Second auxiliary plate
- 40, 41: Gasket
- 50: Insulation plate
- 51: Opening
- 52: Insulating pad
- 60: Center pin
- 61, 62: Second current collector
- 71, 72: Electrode terminal
- 81: First opening
- 82: Second opening
- 100, 101: Electrode assembly
- 211: Sealing member
- 421: Notch
- 422: Central portion
- 423: Convex portion
- 424: Outer portion
- 11a, 13a: Electrode active portions
- 11b, 13b: Electrode uncoated portions
- 11c, 13c: Frontal end uncoated regions
- 11e, 13e: Frontmost end uncoated regions

## Claims

1. An electrode assembly (100, 101) comprising:
a first electrode (11) comprising a conductive substrate and having a first electrode active portion (11a) comprising a first active material layer and a first electrode uncoated portion (11b) without the first active material layer;
a separator (12); and
a second electrode (13) comprising a conductive substrate and having a second electrode active portion (13a) comprising a second active material layer and a second electrode uncoated portion (13b) without the second active material layer,
wherein the first electrode (11), the separator (12), and the second electrode (13) are stacked on each other and wound,
wherein at least one of the first electrode uncoated portion (11b) and the second electrode uncoated portion (13b) has a plurality of inclined cutout portions (7) inclined with respect to a length direction of the electrode assembly (100, 101), and
wherein an interval between adjacent ones of the inclined cutout portions (7) at a frontal end of the electrode assembly (100, 101) and an interval (P1, P2, P3, P4) between adjacent ones of the inclined cutout portions (7) at a rear end of the electrode assembly (100, 101) are different.

2. The electrode assembly (100, 101) of claim 1, wherein the intervals (P1, P2, P3, P4) gradually increase from a frontal end toward a rear end.

3. The electrode assembly (100, 101) of claim 1 or 2, wherein the intervals (P1, P2, P3, P4) are in a range between 1 mm to 4 mm.

4. The electrode assembly (100, 101) of any of claims 1 to 3, wherein an inclination angle of the inclined cutout portion (7) at the frontal end and an inclination angle of the inclined cutout portion (7) at the rear end are different.

5. The electrode assembly (100, 101) of claim 4, wherein the inclination angles of the inclined cutout portions (7) are greater than or equal to 45 and smaller than 90 degrees.

6. The electrode assembly (100, 101) of any of claims 1 to 5, wherein the inclined cutout portions (7) have a depth in a range of 40% to 80% of a height of the corresponding first electrode uncoated portion (11b) or second electrode uncoated portion (13b).

7. The electrode assembly (100, 101) of any of claims 1 to 6, wherein each of the first electrode uncoated portion (11b) and the second electrode uncoated portion (13b) has a first region having a plurality of small portions of different widths and a second region having a plurality of small portions having the same width, and
wherein the first region is at the frontal end of the electrode assembly (100, 101).

8. The electrode assembly (100, 101) of any of claims 1 to 7, wherein at least one of the first electrode uncoated portion (11b) or the second electrode uncoated portion (13b) comprises a frontal end uncoated region (11c, 13c), and
wherein the frontal end uncoated region (11c, 13c) has a height that increases in multi-stages away from the frontal end of the electrode assembly (100, 101).

9. The electrode assembly (100, 101) of claim 8, wherein a width of each stage of the frontal end uncoated region (11c, 13c) is in a range of 45 mm to 55 mm.

10. The electrode assembly (100, 101) of claim 8, wherein a width of the frontal end uncoated region (11c, 13c) has a length in a range of 10% to 20% of an entire length of an active material layer of the corresponding first electrode (11) or second electrode (13).

11. The electrode assembly (100, 101) of claim 10, wherein a frontmost end uncoated region (11e, 13e) is connected to the frontal end uncoated region (11c, 13c) to be closer to a center than the frontal end uncoated region (11c, 13c), and
wherein a height of the frontmost end uncoated region (11e, 13e) is 1 mm or less.

12. The electrode assembly (100, 101) of claim 11, wherein a width of the frontal end uncoated region (11c, 13c) and a width of the frontmost end uncoated region (11e, 13e) is in a range of 20% to 30% of the entire length of the active material layer of the corresponding first electrode (11) or the second electrode (13).

13. The electrode assembly (100, 101) of any of claims 1 to 12, wherein a frontmost end uncoated region (11e, 13e) is connected to at least one of the first electrode uncoated portion (11b) or the second electrode uncoated portion (12b, 13b) and is connected to be closer to a center than the first electrode uncoated portion (11b) or the second electrode uncoated portion (12b, 13b), and
wherein a height of the frontmost end uncoated region (11 e, 13e) is 1 mm or less.

14. The electrode assembly (100, 101) of claim 13, wherein a width of the frontmost end uncoated region (11e, 13e) has a length in a range of 10% to 20% of an entire length of an active material layer of the corresponding first electrode (11) or the second electrode (13).

15. A rechargeable battery comprising:
the electrode assembly (100, 101) according to claim 1;
a cylindrical case (20) accommodating the electrode assembly (100, 101);
a center pin (60) at a center of the electrode assembly (100, 101); and
a cap assembly (30) covering and sealing the cylindrical case (20).
